# EUROPÄISCHE PATENTSCHRIFT

(11) **EP 0 828 428 B1**
(45) Veröffentlichungstag und Bekanntmachung des Hinweises auf die Patenterteilung: **27.12.2000**
(21) Anmeldenummer: 96917327.7
(22) Anmeldetag: 15.05.1996
(51) Int. Cl.: A22C 25/17

(54) **VORRICHTUNG ZUM ENTHÄUTEN UND ABSCHWARTEN VON BEHANDLUNGSGUT**
FLAYING AND DE-RINDING DEVICE
DISPOSITIF PERMETTANT DE DEPOUILLER ET DE DECOUENNER UN PRODUIT A TRAITER

(30) Priorität: 18.05.1995 DE 19517939
(43) Veröffentlichungstag der Anmeldung: 18.03.1998
(73) Patentinhaber: Maja-Maschinenfabrik Hermann Schill GmbH, D-77694 Kehl-Goldscheuer (DE)
(72) Erfinder: SCHILL, Joachim, D-77694 Kehl (DE)
(74) Vertreter: Schuster, Gregor, Dipl.-Ing.
(86) Internationale Anmeldenummer: DE9600852
(87) Internationale Veröffentlichungsnummer: WO9636235

(56) Entgegenhaltungen:
- EP-A- 0 583 593
- DE-C- 687 585
- DE-C- 732 874
- DE-U- 8 625 286
- FR-A- 2 057 654
- FR-A- 2 666 199
- US-A- 5 399 118
- SOVIET PATENT ABSTRACTS Section Ch, Week 8851 8.Februar 1989 Derwent Publications Ltd., London, GB; Class D12, AN 88366932 XP002011517 & SU,A,1 402 321 (TEKHRYSPROM PRODN) , 15.Juni 1988

## Beschreibung

Die Erfindung geht aus von einer Vorrichtung zum Enthäuten und Abschwarten von Behandlungsgut nach der Gattung des Hauptanspruchs.

Eine Vorrichtung der gattungsgemäßen Art ist beispielsweise aus der DE-PS 30 20 351 bekannt. Eine über eine Haltevorrichtung am Grundgestell befestigte Druckwalze bewirkt das Andrücken des Behandlungsgutes an die Schneideinheit und sorgt dafür, daß das Behandlungsgut über die Schneideinheit hinwegbewegt wird. Das Abtransportieren des Behandlungsgutes ist jedoch nicht zuverlässig geregelt. Erfolgt der Abtransport beispielsweise verzögert, so kann das Behandlungsgut durch die Druckwalze beschädigt werden.

Demgegenüber hat die erfindungsgemäße Vorrichtung zum Enthäuten und Abschwarten nach der Gattung des Hauptanspruchs den Vorteil, daß in Transportrichtung gesehen unmittelbar hinter der Druckwalze eine Transportwalze angeordnet ist, die das bereits enthäutete oder abgeschwartete Behandlungsgut erfasst und von der Schneideinheit wegtransportiert. So kann beispielsweise das Behandlungsgut über die Transprortwalze einem Förderband zugeführt werden, welches das Behandlungsgut zu weiteren Bearbeitungsvorrichtungen transportiert. Das Behandlungsgut wird automatisch abtransportiert, ein Eingreifen von Hand in den Bereich der Schneideinheit kann und sollte im Hinblick auf die mögliche Verletzungsgefahr unterbleiben. Zum Abtransport des Behandlungsgutes ist es ferner nicht notwendig die Position der Druckwalze zu verändern. Das vorwiegend flache Behandlungsgut wird durch die Zugwalze und die Druckwalze kontinuierlich über die Schneideinheit hinwegbewegt, ohne sich dabei zu drehen. Direkt hinter der Schneideinheit wird das Behandlungsgut von der Transportwalze erfasst und weitergeführt. Auf diese Weise wird verhindert, daß das Behandlungsgut beim Abtransport beschädigt wird. Dies ist insbesondere bei Geflügel von Bedeutung, da das Fleisch von Geflügel bei unsachgemäßem Abtransport in Stücke zerfallen kann.

Nach einer vorteilhaften Ausgestaltung der Erfindung weisen Druckwalze und Transportwalze scheibenartige Erhebungen auf und greifen ineinander. Dadurch kann der Abschnitt zwischen den parall verlaufenden Achsen der Druck- und der Transportwalze kleiner sein als die Summe der beiden Radien der Walzen. Die Walzen sind so nah beieinander angeordnet, daß das Behandlungsgut stets von der Transportwalze erfasst wird. Damit besteht keine Gefahr, daß das Behandlungsgut nicht vollständig über die Schneideinheit hinwegbewegt wird, und dabei von der Druckwalze beschädigt werden könnte.

Nach einer weiteren vorteilhaften Ausgestaltung der Erfindung haben Druckwalze und Transportwalze einen gemeinsamen Antrieb. Für einen gleichmäßigen Abtransport ohne Beschädigung des Behandlungsgutes ist es von Vorteil, wenn sich Druck- und Transportwalze, die nahezu den selben Durchmesser haben, mit derselben Geschwindigkeit drehen. Dies ist bei gleichem Antrieb gewährleistet.

Nach einer vorteilhaften Ausgestaltung der Erfindung sind die scheibenartigen Erhebungen der Transportwalze und/oder der Druckwalze als schaufelartige Mitnahmeabschnitte für das Behandlungsgut ausgebildet. Diese aus Kunststoff oder Gummi gefertigten Mitnahmeabschnitte ermöglichen ein sicheres Erfassen des Behandlungsgutes.

Alternativ dazu sind nach einer weiteren vorteilhaften Ausgestaltung der Erfindung die scheibenartigen Erhebungen der Transportwalze und/oder der Druckwalze als zahnartige Mitnahmeabschnitte für das Behandlungsgut ausgebildet. Auch bei dieser Form der Mitnahmeabschnitte ist ein Angreifen am Behandlungsgut gewährleistet.

Weitere Vorteile und vorteilhafte Ausgestaltungen der Erfindung sind der nachfolgenden Beschreibung, der Zeichnung und den Ansprüchen entnehmbar.

Ein Ausführungsbeispiel ist in der Zeichnung dargestellt und im folgenden näher beschrieben.

Es zeigen:
- Fig. 1: ein Teil einer erfindungsgemäßen Abschwart- und Enthäutungsvorrichtung in einer Seitenansicht
- Fig. 2: eine Draufsicht des in Fig. 1 dargestellten Teils der Maschine in gegenüber in Fig. 1 geändertem Maßstab

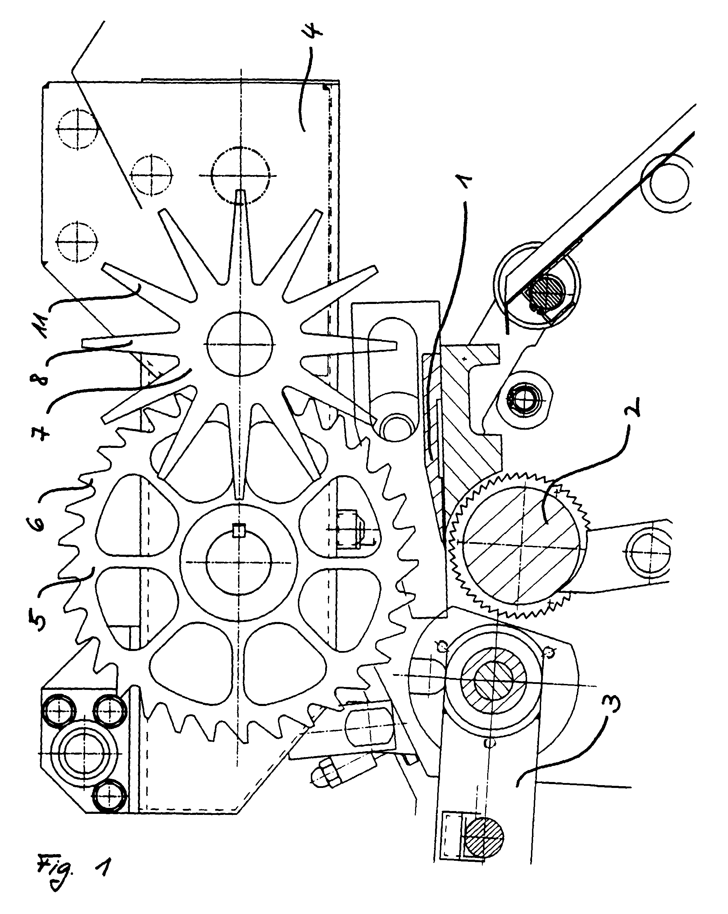

In Fig. 1 ist ein Teil einer erfindungsgemäßen Abschwart- und Enthäutungsvorrichtung dargestellt. Über die Zuführeinrichtung 3 wird das Behandlungsgut der Zugwalze 2 zugeführt, die an dem Behandlungsgut angreift und es zur Schneideinheit 1 transportiert. Zusätzlich wird das Behandlungsgut durch eine an einer Haltevorrichtung 4 angeordneten Druckwalze 5 von oben gegen die Schneideinheit 1 gedrückt. Die Druckwalze weist scheibenartige Erhebungen 6 auf, die als zahnartige Mitnahmeabschnitte ausgebildet sind und die an dem Behandlungsgut angreifen können. Zug- und Druckwalze rotieren gegenläufig. Während die durch die Schneideinheit vom Behandlungsgut abgetrennte Schicht zwischen Schneideinheit 1 und Zugwalze 2 nach unten fällt, wird das Behandlungsgut durch die Druckwalze 5 über die Schneideinheit 1 hinwegbewegt und von der Transportwalze 7 erfasst. Die Transportwalze sorgt dafür, daß das Behadlungsgut von der Schneideinheit weg und einer in der Zeichnung nicht dargestellten Abtransporteinrichtung zugeführt wird. Die Transportwalze 7 weist wie die Druckwalze scheibenartige Erhebungen auf, die als zahnartigen Mitnahmneabschnitte 11 ausgebildet sind. Die Mitnahmeabschnitte bestehen aus Gummi oder Kunststoff und weisen eine gewisse Elastizität auf, so daß sie sich dem Behandlungsgut anpassen können.

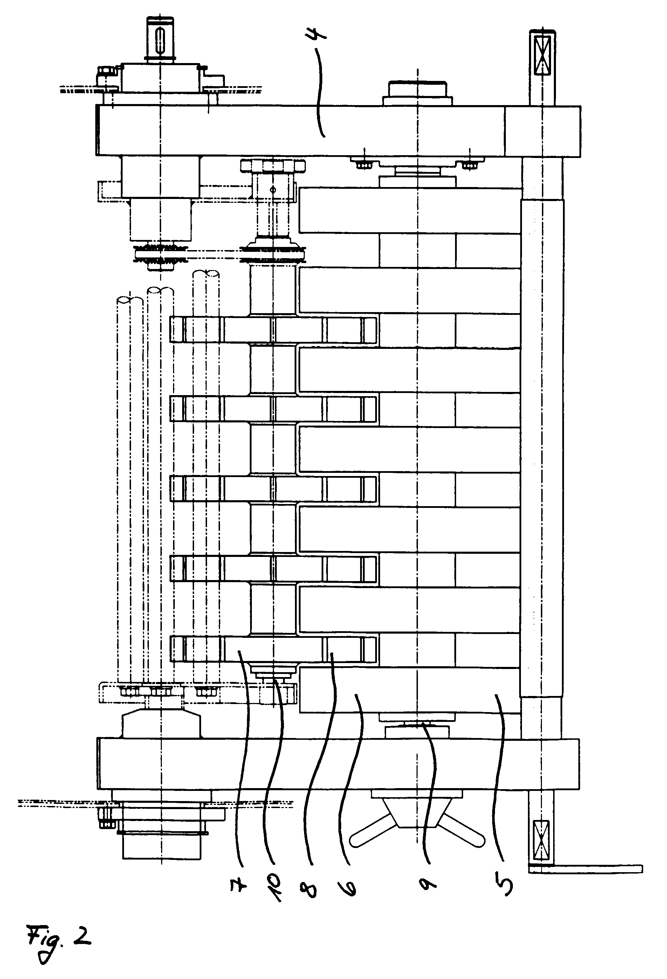

Fig. 2 zeigt die Anordnung aus Fig. 1 in einer Ansicht von oben. Druckwalze 5 und die Transportwalze 7 verlaufen parallel und sind über Achsen 9 und 10 an der Haltevorrichtung 4 aufgehängt. Die scheibenartigen Erhebungen 6, 8 der Druckwalze 5 und der Transportwalze 7 greifen ineinander, so daß der Abstand der Achsen 9 und 10 kleiner ist als die Summe der Radien der beiden Walzen. Die gestrichelt angedeuteten Stangen sind Distanzstangen der Haltevorrichtung.

Alle in der Beschreibung, in den nachfolgenden Anspüchen und der Zeichnung dargestellten Merkmale können sowohl einzeln als auch in beliebiger Kombination miteinander erfindungswesentlich sein.

### Bezugszahlenliste

- 1: Schneideinheit
- 2: Zugwalze
- 3: Zuführeinrichtung
- 4: Haltevorrichtung
- 5: Druckwalze
- 6: scheibenartige Erhebungen
- 7: Transportwalze
- 8: scheibenartige Erhebungen
- 9: Achse
- 10: Achse
- 11: Mitnahmeabschnitte

## Patentansprüche

1. Vorrichtung zum Enthäuten und Abschwarten von Behandlungsgut, wie Fleisch, Fischstücke oder dergleichen
- mit einer Schneideinheit (1),
- mit einer das Behandlungsgut zur Schneideinheit (1) transportierenden Zugwalze (2),
- mit einer Zuführeinrichtung (3), die das Behandlungsgut der Zugwalze (2) zuführt,
- mit einer Haltevorrichtung (4) für das Behandlungsgut und
- mit einer an der Haltevorrichtung (4) angeordneten das Behandlungsgut gegen die Schneideinheit (1) drückenden Druckwalze (5),
dadurch gekennzeichnet,
- daß an der Haltevorrichtung (4) in Transportrichtung gesehen hinter der Druckwalze (5) eine das Behandlungsgut von der Schneideinheit ( 1 ) abtransportierende Transportwalze (7) angeordnet ist,
- daß die Achse (10) der Transportwalze (7) parallel zur Druckwalze (5) verläuft,
- daß die Tranportwalze (7) Mitnahmeabschnitte (11) für das Behandlungsgut aufweist.

2. Vorrichtung nach Anspruch 1, dadurch gekennzeichnet, daß Druckwalze und Transportwalze scheibenartige Erhebungen (6, 8) aufweisen und ineinandergreifen.

3. Vorrichtung nach Anspruch 1 oder 2, dadurch gekennzeichnet, daß Druckwalze und Transportwalze einen gemeinsamen Antrieb haben.

4. Vorrichtung nach einem der vorhergehenden Ansprüche, dadurch gekennzeichnet, daß die scheibenartigen Erhebungen der Transportwalze und/oder der Druckwalze als schaufelartige Mitnahmeabschnitte ausgebildet sind.

5. Vorrichtung nach einem der Ansprüche 1 bis 3, dadurch gekennzeichnet, daß die scheibenartigen Erhebungen der Transportwalze und/oder der Druckwalze als zahnartige Mitnahmeabschnitte (11) ausgebildet sind.

## Claims

1. Device for the flaying and de-rinding of treatment product such as meat, fish pieces or the like
- with a cutting unit (1),
- with a draw roller (2) transporting the treatment product to the cutting unit (1),
- with a feeding unit (3) which feeds the treatment product to the draw roller (2),
- with a retaining device (4) for the treatment product and
- with a press roller (5) arranged on the retaining device (4) in such a way that it presses the treatment product against the cutting unit (1),
characterised in that
- a transport roller (7) which transports the treatment product away from the cutting unit (1) is arranged on the retaining device (4) in the transport direction as viewed from behind the press roller (5),
- the axle (10) of the transport roller (7) runs parallel to the press roller (5), and
- the transport roller (7) has carrying sections (11) for the treatment product.

2. Device according to claim 1, characterised in that the press roller and transport roller have disk-like elevations (6, 8) and mesh together.

3. Device according to claim 1 or 2, characterised in that press roller and transport roller have a common drive.

4. Device according to one of the above claims, characterised in that the disk-like elevations of the transport roller and/or press roller are designed as shovel-like carrying sections.

5. Device according to one of claims 1 to 3, characterised in that the disk-type elevations of the transport roller and/or press roller are designed as tooth-like carrying sections (11).

## Revendications

1. Dispositif permettant de dépouiller et de découenner un produit à traiter tel que la viande, le poisson ou similaire
- avec une unité de découpage (1),
- avec un cylindre d'entraînement (2) transportant le produit à traiter vers l'unité de découpage (1),
- avec un dispositif d'alimentation (3) qui amène le produit à traiter au rouleau d'entraînement (2),
- avec un dispositif de support (4) pour le produit à traiter et
- avec un cylindre de pression (5) disposé sur l'unité de support (4) et appuyant le produit à traiter contre l'unité de découpage (1),
caractérisé en ce que
- un cylindre de transport (7) évacuant le produit à traiter de l'unité de découpage (1) est disposé sur le dispositif de support (4) derrière le cylindre de pression (5) vu dans le sens de transport,
- l'axe (10) du cylindre de transport (7) est parallèle au cylindre de pression (5),
- le cylindre de transport (7) présente des parties d'entraînement (11) pour le produit à traiter.

2. Dispositif à traiter selon la revendication 1, caractérisée en ce que le cylindre de pression et le cylindre de transport présentent des élévations en forme de disque (6, 8) et s'emboîtent les uns dans les autres.

3. Dispositif selon la revendication 1 ou 2, caractérisé en e que le cylindre de pression et le cylindre de transport ont un entraînement commun.

4. Dispositif selon l'une quelconque des revendications précédentes, caractérisé en ce que les élévations en forme de disque du cylindre de transport et/ou du cylindre de pression sont conçues comme des parties d'entraînement du type ailettes.

5. Dispositif selon l'une quelconque des revendications 1 à 3, caractérisé en ce que les élévations en forme de disque du cylindre de transport et/ou du cylindre de pression sont conçues comme des parties d'entraînement (11) du type dents.
